# EUROPÄISCHE PATENTSCHRIFT

(11) **EP 3 395 538 B1**
(45) Veröffentlichungstag und Bekanntmachung des Hinweises auf die Patenterteilung: **09.09.2020**
(21) Anmeldenummer: 18169476.1
(22) Anmeldetag: 26.04.2018
(51) Int. Cl.: B29C 49/42, B29C 49/78, B29L 31/00

(54) **VORRICHTUNG ZUR DRUCKLUFTSTEUERUNG**
DEVICE FOR PNEUMATIC CONTROL
DISPOSITIF DE COMMANDE PNEUMATIQUE

(30) Priorität: 27.04.2017 DE 102017109112
(43) Veröffentlichungstag der Anmeldung: 31.10.2018
(73) Patentinhaber: Norgren AG, 8362 Balterswil (CH)
(72) Erfinder: Schmid, Daniel, 8362 Balterswil (CH)
(74) Vertreter: Schmalz, Günther

(56) Entgegenhaltungen:
- EP-A1- 2 347 887
- EP-A2- 1 566 550
- DE-A1-102013 100 513
- US-A1- 2012 241 012
- US-A1- 2015 050 381

## Beschreibung

Die vorliegende Erfindung betrifft eine Vorrichtung zur Druckluftsteuerung, insbesondere zur Druckluftsteuerung von Streckblasvorrichtungen. Gemäß eines weiteren Aspekts betrifft die Erfindung eine Streckblasvorrichtung, welche eine derartige Vorrichtung zur Druckluftsteuerung aufweist.

Gattungsgemäße Vorrichtungen aus dem Stand der Technik sind in den Dokumenten US2012/241012A1, EP2347887A1 und DE10 2013 100513A1 beschrieben.

Das Wort Blackblock(s) kommt häufig in der Anmeldung vor, und soll selbstverständlich Blasblock(s) gelesen und verstanden werden.

Streckblasen ist ein Verfahren zur Herstellung von Kunststoff-Behältern aus thermoplastischen Kunststoffen, wie PET, PVC oder PP. Das Verfahren wird insbesondere zur Herstellung von PET-Flaschen eingesetzt. Dabei werden Vorformlinge in einem ersten Verfahrensschritt auf eine Verarbeitungstemperatur von 90-120° temperiert, sodass der Vorformling in einem zweiten Arbeitsschritt durch Streckblasen plastisch verformt werden kann. Hierzu wird eine Reckstange in eine Mündung des Vorformlings eingeführt, um diesen mechanisch in Längsrichtung zu verstrecken. Anschließend erfolgt eine pneumatische Druckausformung, in welcher das PET-Material gegen Innenwände einer Blasform gepresst wird. Bei der Druckausformung wird zunächst ein Vorblasdruck bereitgestellt, welcher dazu dient das PET Material gegen die Innenwand der Blasform zu drücken. In einem zweiten Blasschritt wird ein Hauptblasdruck, welcher um ein Vielfaches höher ist als der Vorblasdruck, bereitgestellt um die endgültige Form des PET-Behälters herzustellen und die Struktur der Blasform vollständig auf das PET-Material zu übertragen.

In den bekannten Streckblas-Vorrichtungen wird eine Vielzahl von Ventilen verwendet, um die exakte Steuerung des Vorblas- und Hauptblasdrucks für eine Vielzahl von Streckblas-Stationen zu ermöglichen. Es ist ferner bekannt, die einzelnen Ventile als separate Ventil-Module an einem Blasblock vorzusehen. Dieser Blasblock wird fest auf enem rotierenden Blasrad einer sogenannten "ROTARY" Streckblasmaschine befestigt. Derartige Blasblöcke erlauben die Steuerung der Streckblas-Stationen von einer zentralen Stelle. Dies erleichtert sowohl den Aufbau als auch den späteren Betrieb der Streckblas-Anlage. Insbesondere wird durch die Blasblöcke ein besonders kompakter Aufbau ermöglicht, da die einzelnen als Magnetventil ausgebildeten Ventil-Module mit sehr geringem Abstand nebeneinander angeordnet sind.

Die einzelnen Ventil-Module des Blackblocks sind individuell durch eine zentrale Steuereinheit ansteuerbar. Hierzu weisen bekannte Vorrichtungen zur Druckluftsteuerung eine Vielzahl von separaten Steuerleitungen auf, welche die Steuereinheit mit einem Gehäuse des Blackblocks verbinden. Es ist ein bekanntes Problem, dass die Vielzahl von Steuerleitungen die Bewegung der Vorrichtung zur Druckluftsteuerung behindert und zum Abrieb der Steuerleitungen/-kabel führt. Dies ist insbesondere deshalb der Fall, da der Blasblock mit dem Blasrad rotiert, wodurch Fliehkräfte entstehen, die auch auf Steuerleitungen zwischen der Steuereinheit und den einzelnen Ventilmodulen wirken und diese ins Schwingen bringen. Durch die Schwingbewegung ergibt sich ein Schüren/Abrieb der Steuerleitungen am Gehäuse des Blasblocks, was die Standzeiten bekannter Vorrichtungen erheblich verringert.

Im Hinblick auf die oben genannte Problemstellung, liegt der vorliegenden Erfindung die Aufgabe zu Grunde eine Vorrichtung zur Druckluftsteuerung sowie eine Streckblasvorrichtung anzugeben, welche die Nachteile bekannter Lösungen umgeht. Insbesondere ist es eine Aufgabe der vorliegenden Erfindung eine Vorrichtung zur Druckluftsteuerung bereitzustellen, bei welcher der Blasblock möglichst frei bewegbar ist und längere Standzeiten aufweist.

Zur Lösung der oben genannten Aufgabe schlägt die vorliegende Erfindung eine Vorrichtung zur Druckluftsteuerung von Streckblasvorrichtungen gemäß dem unabhängigen Patentanspruch 1 vor. Insbesondere betrifft die Erfindung eine Vorrichtung zur Druckluftsteuerung von Streckblasvorrichtungen welche einen Blasblock mit einem Gehäuse sowie mindestens zwei Ventil-Modulen aufweist. Die Vorrichtung weist ferner eine Steuereinheit auf, welche über je eine separate Steuerleitung mit jedem der mindestens zwei Ventil-Module elektrisch verbindbar ist. Die separaten Steuerleitungen sind ausschließlich innerhalb des Gehäuses des Blackblocks angeordnet. Die Steuereinheit dient dazu, die einzelnen Ventil-Module individuell anzusteuern. Hierzu wird je ein individuelles Steuersignal von der Steuereinheit, über die separaten Steuerleitungen, an das jeweilige Ventil-Modul gesendet.

Die erfindungsgemäße Lösung hat den Vorteil, dass die Vielzahl an Steuerleitungen, welche mit den einzelnen Ventil-Modulen verbunden sind innerhalb des Gehäuses verlaufen und somit gemeinsam mit diesem bewegt werden können. Die einzelnen Steuerleitungen behindern daher die Bewegung des Blackblocks nicht. Der Blasblock kann somit einen einzelnen Steueranschluss aufweisen, welcher mit einer einzigen Steuerleitung verbunden ist, anstatt den Blasblock mit einer separaten Steuerleitungen pro Ventil-Modul zu verbinden. Die Anzahl an Steuerleitungen, welche sich an der Außenseite des Blasblock-Gehäuses befinden wird hierdurch signifikant reduziert.

Gemäß einer weiteren Ausführungsform, sind die mindestens zwei Ventil-Module lösbar mit dem Gehäuse verbunden. Die Ventil-Module sind dementsprechend zu Wartungszwecken schnell und einfach austauschbar. Da die Steuerleitungen innerhalb des Gehäuses des Blackblocks verlaufen, ist es zum Austausch der Ventil-Module auch nicht notwendig, die Steuerleitungen vor dem Austausch zunächst von den Ventil-Modulen zu entfernen. Vielmehr verbleiben die Steuerleitungen innerhalb des Blackblocks, unabhängig davon ob die Steuerleitung mit einem korrespondierenden Ventil-Modul verbunden ist oder nicht. Die separaten Steuerleitungen können über einen Steckverbinder elektrisch mit einem korrespondierenden Ventil-Modul verbunden sein. Die Steckverbinder können sich hierzu an einer Außenseite des Gehäuses befinden. Mit anderen Worten ist jede der separaten Steuerleitungen innerhalb des Gehäuses des Blackblocks an einen korrespondierenden Steckverbinder angeschlossen. Durch Einstecken des Ventil-Moduls in den Steckverbinder ist das jeweilige Ventil-Modul direkt mit der korrekten Steuerleitung verbunden.

Nach einer weiteren Ausführungsform weist die Vorrichtung eine erste Steuerleitung zwischen der Steuereinheit und einem ersten Ventil-Modul sowie eine zweite Steuerleitung zwischen der Steuereinheit und dem zweiten Ventil-Modul auf.

Die Steuereinheit kann außerhalb des Gehäuses des Blackblocks angeordnet und über einen Feldbus oder ein Multipol-Kabel mit den separaten Steuerleitungen verbunden sein. Gemäß dieser Ausführungsform werden die Steuersignale der Steuereinheit über ein einzelnes Steuerkabel an den Blasblock übertragen. Erst innerhalb des Blackblocks werden die Steuersignale auf die entsprechenden, separaten Steuerleitungen verteilt, um die einzelnen Ventil-Module individuell anzusteuern. Im Falle eines Feldbuses zwischen der externen Steuereinheit und dem Blasblock, befindet sich ein Multiplexer innerhalb des Blasblocks, welcher die Signale des Feldbusses auf die separaten Steuerleitungen überträgt. Alternativ ist ein Multipol-Kabel vorgesehen, welches sich zwischen der Steuereinheit und des Blasblocks erstreckt und, innerhalb des Gehäuses, in separate Steuerleitungen innerhalb zerfällt.

Gemäß einer alternativen Ausführungsform ist die Steuereinheit innerhalb des Gehäuses, zwischen einem Steuereingang und den separaten Steuerleitungen angeordnet. Dementsprechend werden die Steuerdaten direkt innerhalb des Gehäuses des Blackblocks erzeugt und auf die separaten Steuerleitungen der einzelnen Ventil-Module verteilt. Die Steuereinheit wird hierbei durch das Gehäuse geschützt.

Die Steuereinheit kann als Leiterplatine ausgebildet sein. Hierdurch wird der Platzbedarf der Steuereinheit innerhalb des Gehäuses des Blackblocks auf ein Minimum reduziert. Insbesondere kann das Gehäuse einen Hohlraum aufweisen, in welchem die Leiterplatine freischwingend gelagert ist. Mit anderen Worten, die Leiterplatine kann innerhalb des Gehäuses lediglich an Randbereichen befestigt sein, wodurch die Leiterplatine innerhalb des Hohlraumes elastisch verformbar ist. Hierdurch werden insbesondere Beschädigungen der Leiterplatine aufgrund von Vibrationen des Blackblocks reduziert bzw. verhindert.

Gemäß einer weiteren Ausführungsform weist die Vorrichtung eine Hauptsteuereinrichtung auf, welche elektrisch mit der Steuereinheit verbunden ist. Die Hauptsteuereinrichtung kontrolliert beispielsweise die gesamte Streckblasanlage und sendet entsprechende Signale an die Steuereinheit sobald der Blasblock aktiviert werden soll. Die Hauptsteuereinrichtung ist vorzugsweise durch eine einzelne Steuerleitung mit der Steuereinheit verbunden. Alternativ kann zusätzlich zur Steuerleitung auch eine Stromversorgungsleitung vorgesehen sein, welche die Stromversorgung der Steuereinheit sicherstellt.

Die Hauptsteuereinrichtung kann über ein Steuerkabel mit der Steuereinheit verbunden sein. Wenn die Steuereinheit innerhalb des Gehäuses angeordnet ist, weist letzteres hierzu einen einzelnen externen Steueranschluss auf, an welchen das Steuerkabel angeschlossen werden kann. Alternativ kann die Hauptsteuereinrichtung über ein drahtloses Netzwerk mit der Steuereinheit verbunden sein. Gemäß dieser Ausführungsform ist es denkbar, dass der Blasblock der erfindungsgemäßen Vorrichtung keinerlei externe Kabelanschlüsse oder lediglich einen Stromversorgungsanschluss aufweist. Mit anderen Worten ist es vorstellbar, dass die Hauptsteuereinrichtung über ein WLAN-Netzwerk mit der Steuereinheit kommuniziert.

Die mindestens zwei Ventil-Module können als 5/2-Ventile ausgebildet sein. Da es sich um eine Vorrichtung handelt, welche vorzugsweise zur Druckluftsteuerung für Streckblasvorgänge vorgesehen ist, handelt es sich bei den Ventil-Modulen insbesondere um pneumatische Ventil-Module. Die Ventil-Module können als Magnetventile ausgebildet sein, welche, durch die separaten Steuerleitungen innerhalb des Blasblock-Gehäuses, aktiviert werden.

Nach einem weiteren Aspekt der vorliegenden Erfindung wird eine Streckblasvorrichtung bereitgestellt, welche die zuvor genannte Vorrichtung zur Druckluftsteuerung aufweist. Die Streckblasvorrichtung kann einen Streckkolben aufweisen, welcher elektrisch mit einer Streckkolben-Steuervorrichtung verbunden ist, wobei die Streckkolben-Steuervorrichtung mit der Hauptsteuereinheit verbunden ist.

Im Rahmen dieser Anmeldung ist es ausdrücklich vorgesehen, dass die unterschiedlichen Ausführungsformen, Aspekte, Beispiele und Alternativen, welche in dieser Anmeldung beschrieben sind einzeln oder in Kombination miteinander beansprucht werden können. Das heißt, alle Ausführungsformen und/oder Merkmale jeglicher Ausführungsform können beliebig miteinander kombiniert werden, solange die Merkmale nicht inkompatibel sind.

Eine oder mehrere Ausführungsformen der vorliegenden Erfindung werden im Folgenden, beispielhaft mit Bezug auf die beiliegenden Zeichnungen beschrieben. Dabei zeigt:
Figur 1 eine schematische Darstellung einer Ausführungsform der erfindungsgemäßen Vorrichtung zur Druckluftsteuerung;
Figur 2 eine schematische Darstellung einer Ausführungsform der erfindungsgemäßen Vorrichtung zur Druckluftsteuerung;
Figuren 3A und 3B perspektivische Seitenansichten einer Ausführungsform der erfindungsgemäßen Vorrichtung;
Figur 4 eine Schnittdarstellung durch die in den Figuren 3a und 3b dargestellte Ausführungsform der erfindungsgemäßen Vorrichtung zur Programmsteuerung; und
Figur 5 eine schematische Darstellung einer Ausführungsform der erfindungsgemäßen Vorrichtung Druckluftsteuerung.

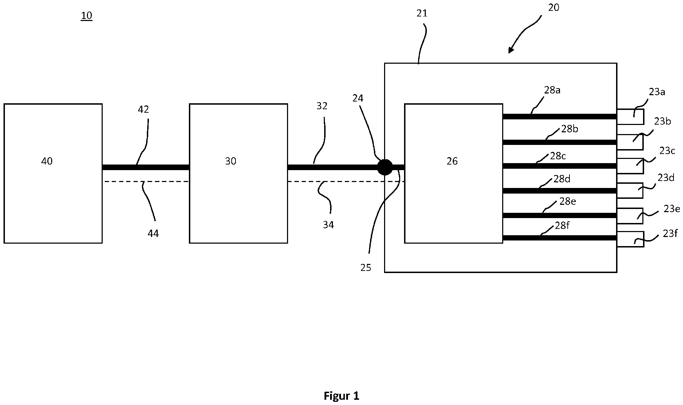

Der Figur 1 ist eine schematische Darstellung einer erfindungsgemäßen Vorrichtung zur Druckluftsteuerung von Steckblaßvorrichtungen zu entnehmen. Die Vorrichtung 10 weist einen Blasblock 20 mit einem Gehäuse 21 auf. Eine Reihe von Ventil-Modulen 23a, 23b, 23c, 23d, 23e, 23f sind am Gehäuse 21 des Blackblocks 20 angebracht. Insbesondere sind in der Darstellung gemäß Figur 1 sechs einzelne Ventil-Module 23a, 23b, 23c, 23d, 23e, 23f dargestellt, welche lösbar an einer Außenseite des Gehäuses 21 angeordnet sind. Eine Steuereinheit 30 ist außerhalb des Gehäuses 20 angeordnet und über ein einzelnes Datenkabel 32 mit dem Blasblock 20 verbunden. Das Datenkabel 32 kann ein Feldbus oder ein Multipol-Kabel sein. In dem Ausführungsbeispiel gemäß Figur 1 handelt es sich bei dem Datenkabel 32 um einen Feldbus, welcher über einen Steckanschluss 24 an das Gehäuse 21 angeschlossen ist.

Innerhalb des Gehäuses 21 des Blackblocks 20 ist ein Multiplexer 26 vorgesehen, welcher über eine Verbindungsleitung 25 mit dem Steckanschluss 24 verbunden ist. Der Multiplexer 26 wandelt die Signale des Feldbus-Datenkabels 32 in einzelne Signale für die jeweiligen Ventil-Module 23a bis 23f um. Hierzu ist der Ausgang des Multiplexer 26 jeweils über separate Steuerleitungen 28a bis 28f mit den einzelnen Ventil-Modulen 23a bis 23f verbunden. Gemäß dieser Ausführungsvariante ist der Blasblock 20 über lediglich ein Datenkabel 32 mit der Steuereinheit 30 verbunden. Dies hat den Vorteil, dass weniger Datenkabel an der Außenseite des Blackblocks 20 angeordnet sind und letztere hierdurch frei bewegbar oder verschwenkbar ist. Dies ist insbesondere deshalb der Fall, da die separaten Steuerleitungen 28a bis 28f für die einzelnen Ventil-Module 23a bis 23f innerhalb des Gehäuses 21 des Blackblocks 20 verlaufen.

Eine optionale Stromversorgungsleitung 34 kann ferner zwischen der Steuereinheit 30 und dem Multiplexer 26 innerhalb des Gehäuses 21 angeordnet sein. Figur 1 zeigt ebenfalls eine Hauptsteuereinrichtung 40, welche über ein weiteres Datenkabel 42 mit der Steuereinheit 30 verbunden ist. Die Hauptsteuereinrichtung 40 kann insbesondere dazu ausgelegt sein, sämtliche Vorgänge einer Streckblasvorrichtung zu kontrollieren. Dagegen ist die Steuereinheit 30 ausschließlich zur Steuerung des Blackblocks 20 ausgelegt. Auch die Hauptsteuereinrichtung 40 kann mit der Steuereinheit 30 über ein Stromversorgungskabel 44 verbunden sein.

Im Betrieb werden Steuerbefehle der Hauptsteuereinrichtung 40 über das Datenkabel 42 an die Steuereinheit 30 weitergegeben. Diese setzt die Steuerbefehle der Hauptsteuereinrichtung 40 in Regelungsanweisungen für die einzelnen Ventil-Module 23a bis 23f und überträgt diese über das einzelne Datenkabel 32 an den Blasblock 20. Das von dem Blasblock 20 empfangene Signal wird über den Steckanschluss 24 und die Steuerleitung 25 an den Multiplexer 26 übergeben, welcher das Feldbus-Signal in einzelne Signale für die unterschiedlichen Ventil-Module 23a bis 23f zerlegt.

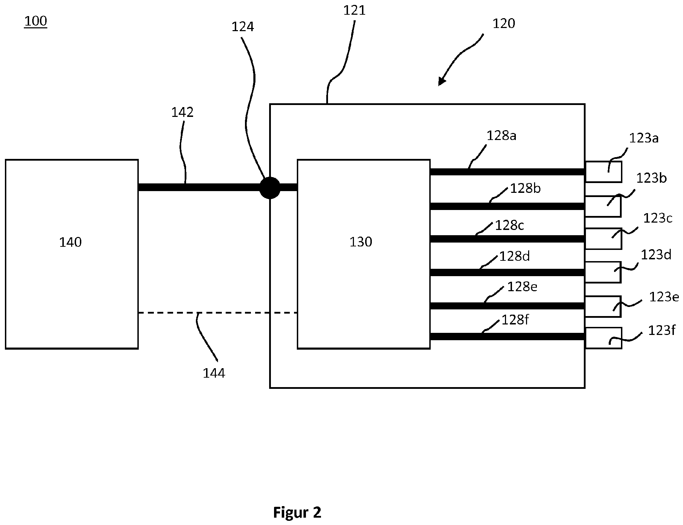

Eine weitere Ausführungsform der erfindungsgemäßen Vorrichtung zur Druckluftsteuerung kann der schematischen Darstellung gemäß Figur 2 entnommen werden. Die Vorrichtung 100 gemäß Figur 2 unterscheidet sich von der Vorrichtung 10 gemäß Figur 1 im Wesentlichen darin, dass die Steuereinheit 130 innerhalb des Gehäuses 121 des Blackblocks 120 angeordnet ist. Ähnlich zur Figur 1 ist auch die Steuereinheit 130 der in Figur 2 dargestellten Vorrichtung 100 mit einer Hauptsteuereinrichtung 140 über ein einzelnes Datenkabel 142 verbunden. In dieser Ausführungsform ist das Datenkabel 142 zwischen der Hauptsteuereinrichtung 140 und der Steuereinheit 130 mit dem einzelnen Steckanschluss 124 verbunden. Da sich die Steuereinheit 130 gemäß der Figur 2 direkt im Gehäuse 121 des Blackblocks 120 befindet, kann auf einen separaten Multiplexer, wie dieser in Figur 1 gezeigt wurde, verzichtet werden. Vielmehr werden die Signale der Steuereinheit 130 direkt über separate Steuerleitungen 128a bis 128f an die einzelnen Ventil-Module 123a bis 123f übermittelt.

Wie auch im Ausführungsbeispiel gemäß Figur 1, verlaufen die separaten Steuerleitungen 128a bis 128f ausschließlich innerhalb des Gehäuses 121 des Blackblocks 120. Somit ist auch gemäß dem Ausführungsbeispiel der Figur 2 nur ein einziges Datenkabel 142 an der Außenseite des Gehäuses 121 angeschlossen. Ein optionales Stromversorgungskabel 144 kann zwischen der Hauptsteuereinrichtung 140 und der im Gehäuse 121 befindlichen Steuereinheit 130 angeordnet sein.

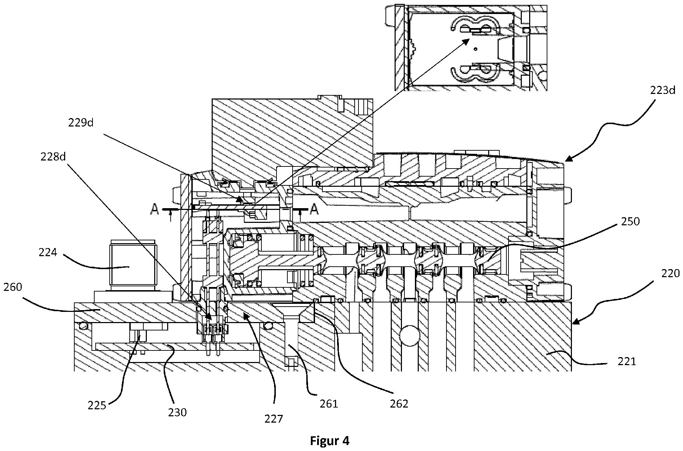

Die Steuereinheit 130 gemäß Figur 2 kann beispielsweise als Leiterplatine ausgebildet sein, wie dies mit Bezug auf die Figur 4 näher beschrieben werden wird.

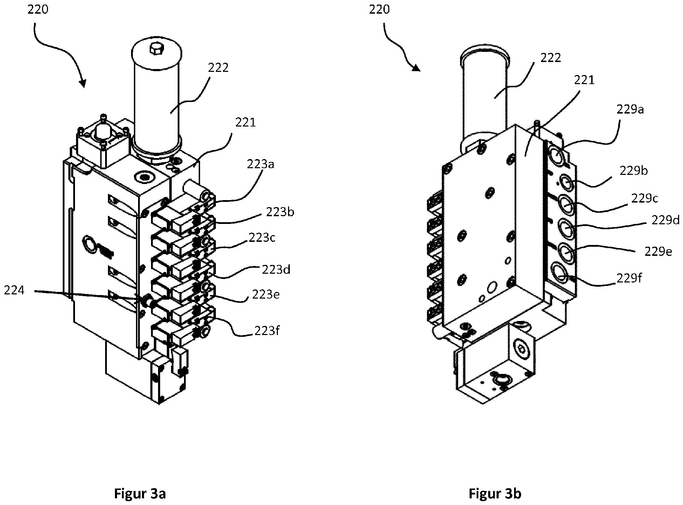

Den Figuren 3a und 3b sind perspektivische Ansichten eines Blasblocks 220 zu entnehmen, wie sie beispielsweise in der Ausrufung gemäß Figur 2 verwendet werden kann. Der Blasblock 220 weist ein Gehäuse 221 auf, welches über einen einzelnen Steckanschluss 224 verfügt. Der Steckanschluss 224 kann mit einem Datenkabel (nicht gezeigt) verbunden sein, welches eine elektrische Verbindung zur Hauptsteuereinrichtung (nicht gezeigt) herstellt. An der Außenseite des Gehäuses 221 sind sechs Ventil-Module 223a bis 223f lösbar angebracht. Insbesondere sind die Ventil-Module in das Gehäuse 221 einsteckbar und können somit schnell und einfach zu Wartungszwecken vom Blasblock 220 gelöst werden.

Der Figur 3b zu entnehmen, dass der Blasblock 220 eine Vielzahl von Druckluftanschlüssen 229a bis 229f aufweist, welche durch das Gehäuse 221 des Blackblocks 220 mit unterschiedlichen Lufteingängen und Luftauslässen der Ventil-Module 223a bis 223f verbunden sind. Ein Schalldämpfer 222 ist ebenfalls an dem Blasblock 220 angebracht und dient dazu die Geräusche des Blackblocks während des Betriebs zu verringern.

Eine Schnittdarstellung durch einen Teil des Blackblocks 220 und des Ventil-Moduls 223d ist der Figur 4 zu entnehmen. Wie zu erkennen ist, ist die Steuereinheit 230 innerhalb des Gehäuses 221 des Blackblocks 220 vorgesehen. Die Steuereinheit 230 ist hierzu innerhalb eines Hohlraumes 227 des Gehäuses 221 angeordnet. Lediglich ein Randbereich der Steuereinheit 230, welche als Leiterplatine ausgebildet ist, ist im Hohlraum 227 befestigt. Der restliche Teil der Leiterplatine ist frei beweglich, d.h. elastisch verformbar, innerhalb des Hohlraumes 227 gelagert. Dementsprechend kann die Steuereinheit 230 Vibrationen des Blackblocks 220 einfach kompensieren.

Die Steuereinheit 230 ist über eine Steuerleitung 225 mit dem Steckanschluss 224 verbunden. An einem anderen Ende ist die Steuereinheit 230 mit einer der separaten Steuerleitungen 228d in Kontakt. Die Steuerleitung 228d verbindet die Steuereinheit 230 mit dem hier gezeigten Ventil-Modul 223d. Selbstverständlich sind die hier nicht gezeigten Ventil-Module 223a 223b, 223c, 223e, 223f über ähnliche, separate Steuerleitungen mit der als Leiterplatine ausgebildeten Steuereinheit 230 verbunden. Die separate Steuerleitung 228d verbindet die Steuereinheit 230 mit einem Empfänger-Modul 229d, welches innerhalb des Ventil-Moduls 223d angeordnet ist. Das Empfänger-Modul 229d empfängt die Signale der Steuereinheit 230 und regelt die Bewegung eines Ventilschiebers 250 entsprechend. Der Aufbau und die Funktion von Ventilschiebern innerhalb der Ventil-Module eines Blasblocks ist hinreichend bekannt und bedarf keiner näheren Erläuterung.

Schließlich ist der Figur 4 zu entnehmen, dass der Blasblock 220 eine lösbare Abdeckung 260 aufweist. Die Abdeckung 260 ist lösbar mit dem Gehäuse 221 des Blackblocks 220 verbunden. Im dargestellten Ausführungsbeispiel wird die Abdeckung 260 durch eine Schraubverbindung 261 am Gehäuse 221 befestigt. Die Abdeckung schließt den Hohlraum 227 auf einer dem Ventil-Module 223d zugewandten Außenseite des Gehäuses 221. Hierzu weist das Gehäuse 221 eine Vertiefung 262 auf, welche auf die Ausmaße der Abdeckung 260 abgestimmt ist, sodass diese mit dem Gehäuse 221 flanscht und eine ebene Oberfläche bildet. Die Abdeckung 260 kann zu Wartungszwecken entfernt werden, wodurch ein schneller und einfacher Zugriff auf die als Leiterplatine ausgebildete Steuereinheit 230 möglich ist.

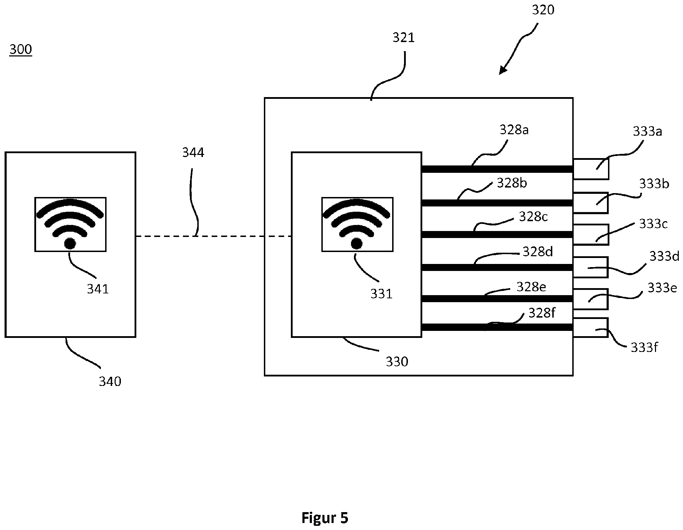

Eine weitere Ausführungsform der erfindungsgemäßen Vorrichtung zur Druckluftsteuerung ist in Figur 5 gezeigt. Die Ausführungsform gemäß Figur 5 entspricht im Wesentlichen der Ausführungsform gemäß Figur 2. Bauteile gleicher Wirkung sind mit entsprechenden Bezugszeichen gekennzeichnet, welche um "200" gegenüber der Figur 2 erhöht wurden.

Wie in Figur 2 ist auch bei der Variante gemäß Figur 5 die Steuereinheit 330 innerhalb des Gehäuses 321 des Blackblocks 320 angebracht. Die Vorrichtung 300 weist eine Hauptsteuereinrichtung 340 auf, welche mit der Steuereinheit 330 kommuniziert. Im Gegensatz zur Vorrichtung 100 gemäß Figur 2, wird die Übertragung von Daten in der Vorrichtung 300 durch ein drahtloses Netzwerk erreicht. Hierzu weist die Hauptsteuerreichrichtung 340 eine erste drahtlose Sende-/Empfängereinheit 341 und die Steuereinheit 330 eine zweite drahtlose Sende-/Empfängereinheit 331 auf. Selbstverständlich ist durch diese Ausgestaltung kein Steuerkabel zwischen der Hauptsteuereinrichtung 340 und der Steuereinheit 330 benötigt. Lediglich eine optionale Stromversorgungsleitung 344 kann zwischen der Hauptsteuereinrichtung 340 und der Steuereinheit 330 vorgesehen sein.

## Patentansprüche

1. Vorrichtung (10; 100; 300) zur Druckluftsteuerung von Streckblasvorrichtungen, wobei die Vorrichtung (10; 100; 300) folgendes aufweist:
einen Blasblock (20; 120; 320), welcher ein Gehäuse (21; 121, 321) sowie mindestens zwei Ventil-Module (23a bis 23f; 123a bis 123f; 323a bis 323f) aufweist;
eine Steuereinheit (30; 130; 330), welche über je eine separate Steuerleitung mit jedem der mindestens zwei Ventil-Module (23a bis 23f; 123a bis 123f; 323a bis 323f) elektrisch verbindbar ist,
**dadurch gekennzeichnet, dass**
die separaten Steuerleitungen (28a bis 28f; 128a bis 128f; 328a bis 328f) auschließlich innerhalb des Gehäuses (21; 121, 321) angeordnet ist.

2. Vorrichtung (10; 100; 300) nach Anspruch 1, wobei die mindestens zwei Ventil-Module (23a bis 23f; 123a bis 123f; 323a bis 323f) lösbar mit dem Gehäuse (21; 121, 321) verbunden sind.

3. Vorrichtung (10; 100; 300) nach Anspruch 1 oder 2, wobei jede der separaten Steuerleitungen (28a bis 28f; 128a bis 128f; 328a bis 328f) über einen Steckverbinder elektrisch mit einem korrespondierenden Ventil-Modul (23a bis 23f; 123a bis 123f; 323a bis 323f) verbunden ist.

4. Vorrichtung (10; 100; 300) nach Anspruch 3, wobei die Steckverbinder an einer Außenseite des Gehäuses (21; 121, 321) angebracht sind.

5. Vorrichtung (10; 100; 300) nach einem der Ansprüche 1 bis 4, wobei die Vorrichtung (10; 100; 300) eine erste Steuerleitung zwischen der Steuereinheit (30; 130; 330) und einem ersten Ventil-Modul sowie eine zweite Steuerleitung zwischen der Steuereinheit (30; 130; 330) und dem zweiten Ventil-Modul aufweist.

6. Vorrichtung (10) nach einem der Ansprüche 1 bis 5, wobei die Steuereinheit (30) außerhalb des Gehäuses (21) angeordnet und über einen Feldbus oder ein Multipol-Kabel mit den separaten Steuerleitungen (28a bis 28f) verbunden ist.

7. Vorrichtung (100; 300) nach einem der Ansprüche 1 bis 5, wobei die Steuereinheit (130; 330) innerhalb des Gehäuses (121, 321) angeordnet ist.

8. Vorrichtung (100; 300) nach Anspruch 7, wobei die Steureinheit (130; 330) als Leiterplatine ausgebildet ist.

9. Vorrichtung (100; 300) nach Anspruch 8, wobei das Gehäuse (221) einen Hohlraum (227) aufweist, in welchem die Leiterplatine freischwingend gelagert ist.

10. Vorrichtung (10; 100; 300) nach einem der Ansprüche 1 bis 9, wobei die Vorrichtung (10; 100; 300) eine Hauptsteuereinrichtung (40; 140; 340) aufweist, welche elektrisch mit der Steuereinheit (30; 130; 330) verbunden ist.

11. Vorrichtung (10; 100) nach Anspruch 10, wobei die Hauptsteuereinrichtung (40; 140) über ein Steuerkabel mit der Steuereinheit (30; 130) verbunden ist.

12. Vorrichtung (300) nach Anspruch 10, wobei die Hauptsteuereinrichtung über ein drahtloses Netzwerk mit der Steuereinheit (330) verbunden ist.

13. Vorrichtung (10; 100; 300) nach einem der Ansprüche 1 bis 12, wobei die mindestens zwei Ventil-Module (23a bis 23f; 123a bis 123f; 323a bis 323f) als 5/2-Ventile ausgebildet sind.

14. Streckblasvorrichtung aufweisend eine Vorrichtung nach einem der Ansprüche 1 bis 13.

15. Streckblasvorrichtung nach Anspruch 14, wobei die Streckblasvorrichtung einen Streckkolben aufweist, welcher elektrisch mit einer Streckkolben-Steuervorrichutng verbunden ist, und wobei die Streckkollben-Steuervorrichtung mit der Steureinheit verbunden ist.

## Claims

1. Device (10; 100; 300) for compressed air control of stretch blow moulding devices, wherein the device (10; 100; 300) has the following:
a blow block (20; 120; 320) which has a housing (21; 121; 321) and at least two valve modules (23a to 23f; 123a to 123f; 323a to 323f);
a control unit (30; 130; 330) which can be electrically connected by means of a separate control line to each of the at least two valve modules (23a to 23f; 123a to 123f; 323a to 323f),
**characterised in that**
the separate control lines (28a to 28f; 128a to 128f; 328a to 328f) are arranged exclusively inside the housing (21; 121, 321) .

2. Device (10; 100; 300) according to claim 1, wherein the at least two valve modules (23a to 23f; 123a to 123f; 323a to 323f) are releasably connected to the housing (21; 121, 321).

3. Device (10; 100; 300) according to claim 1 or claim 2, wherein each of the separate control devices (28a to 28f; 128a to 128f; 328a to 328f) is electrically connected to a corresponding valve module (23a to 23f; 123a to 123f; 323a to 323f) by means of a plug-type connector.

4. Device (10; 100; 300) according to claim 3, wherein the plug-type connectors are fitted to an outer side of the housing (21; 121, 321).

5. Device (10; 100; 300) according to any one of claims 1 to 4, wherein the device (10; 100; 300) has a first control line between the control unit (30; 130; 330) and a first valve module and a second control line between the control unit (30; 130; 330) and the second valve module.

6. Device (10) according to any one of claims 1 to 5, wherein the control unit (30) is arranged outside the housing (21) and is connected to the separate control lines (28a to 28f) by means of a field bus or a multipole cable.

7. Device (100; 300) according to any one of claims 1 to 5, wherein the control unit (130; 330) is arranged inside the housing (121, 321).

8. Device (100; 300) according to claim 7, wherein the control unit (130; 330) is constructed as a printed circuit board.

9. Device (100; 300) according to claim 8, wherein the housing (221) has a hollow space (227), in which the printed circuit board is supported in a freely oscillating manner.

10. Device (10; 100; 300) according to any one of claims 1 to 9, wherein the device (10; 100; 300) has a main control device (40; 140; 340) which is electrically connected to the control unit (30; 130; 330).

11. Device (10; 100) according to claim 10, wherein the main control device (40; 140) is connected to the control unit (30; 130) by means of a control cable.

12. Device (300) according to claim 10, wherein the main control device is connected to the control unit (330) by means of a wireless network.

13. Device (10; 100; 300) according to any one of claims 1 to 12, wherein the at least two valve modules (23a to 23f; 123a to 123f; 323a to 323f) are constructed as 5/2 valves.

14. Stretch blow moulding device having a device according to any one of claims 1 to 13.

15. Stretch blow moulding device according to claim 14, wherein the stretch blow moulding device has a stretching piston which is electrically connected to a stretching piston control device and wherein the stretching piston control device is connected to the control unit.

## Revendications

1. Dispositif (10 ; 100 ; 300) de commande pneumatique de dispositifs d'étirage-soufflage, le dispositif (10 ; 100 ; 300) comportant les éléments suivants :
un bloc de soufflage (20 ; 120 ; 320) qui comporte un carter (21 ; 121, 321) ainsi qu'au moins deux modules de soupape (23a à 23f; 123a à 123f; 323a à 323f) ;
une unité de commande (30 ; 130 ; 330) qui peut être raccordée électriquement à chacun des au moins deux modules de soupape (23a à 23f; 123a à 123f; 323a à 323f) par le biais de respectivement une ligne de commande séparée,
**caractérisé en ce que**
les lignes de commande séparées (28a à 28f ; 128a à 128f ; 328a à 328f) sont disposées exclusivement à l'intérieur du carter (21 ; 121, 321).

2. Dispositif (10 ; 100 ; 300) selon la revendication 1, les au moins deux modules de soupape (23a à 23f ; 123a à 123f ; 323a à 323f) étant raccordés de façon détachable au carter (21 ; 121, 321).

3. Dispositif (10 ; 100 ; 300) selon la revendication 1 ou 2, chacune des lignes de commande séparées (28a à 28f ; 128a à 128f ; 328a à 328f) étant raccordée électriquement à un module de soupape (23a à 23f; 123a à 123f; 323a à 323f) correspondant par le biais d'un connecteur.

4. Dispositif (10 ; 100 ; 300) selon la revendication 3, les connecteurs étant mis en place sur un côté extérieur du carter (21 ; 121, 321).

5. Dispositif (10 ; 100 ; 300) selon l'une des revendications 1 à 4, le dispositif (10 ; 100 ; 300) comportant une première ligne de commande entre l'unité de commande (30 ; 130 ; 330) et un premier module de soupape, ainsi qu'une deuxième ligne de commande entre l'unité de commande (30 ; 130 ; 330) et le deuxième module de soupape.

6. Dispositif (10) selon l'une des revendications 1 à 5, l'unité de commande (30) étant disposée à l'extérieur du carter (21) et étant raccordée aux lignes de commande séparées (28a à 28f) par le biais d'un bus de terrain ou d'un câble multipôle.

7. Dispositif (100 ; 300) selon l'une des revendications 1 à 5, l'unité de commande (130 ; 330) étant disposée à l'intérieur du carter (121, 321).

8. Dispositif (100 ; 300) selon la revendication 7, l'unité de commande (130 ; 330) étant constituée en tant que carte de circuit imprimé.

9. Dispositif (100 ; 300) selon la revendication 8, le carter (221) comportant une cavité (227) dans laquelle la carte de circuit imprimé est supportée de façon librement oscillante.

10. Dispositif (10 ; 100 ; 300) selon l'une des revendications 1 à 9, le dispositif (10 ; 100 ; 300) comportant un équipement de commande principal (40 ; 140 ; 340) qui est raccordé électriquement à l'unité de commande (30 ; 130 ; 330).

11. Dispositif (10 ; 100) selon la revendication 10, l'équipement de commande principal (40 ; 140) étant raccordé à l'unité de commande (30 ; 130) par le biais d'un câble de commande.

12. Dispositif (300) selon la revendication 10, l'équipement de commande principal étant raccordé à l'unité de commande (330) par le biais d'un réseau sans fil.

13. Dispositif (10 ; 100 ; 300) selon l'une des revendications 1 à 12, les au moins deux modules de soupape (23a à 23f; 123a à 123f; 323a à 323f) étant constitués en tant que soupapes 5/2.

14. Dispositif d'étirage-soufflage comportant un dispositif selon l'une des revendications 1 à 13.

15. Dispositif d'étirage-soufflage selon la revendication 14, le dispositif d'étirage-soufflage comportant un piston d'étirage qui est raccordé électriquement à un dispositif de commande de piston d'étirage, et le dispositif de commande de piston d'étirage étant raccordé à l'unité de commande.
